# EUROPEAN PATENT APPLICATION

(11) **EP 1 496 558 A1**
(43) Date of publication of application: **12.01.2005**
(21) Application number: 03015903.2
(22) Date of filing: 11.07.2003
(51) Int. Cl.: H01M 8/02

(54) **Water draining structure for gas reaction plate of fuel cell stack**

(71) Applicant: Asia Pacific Fuel Cell Technologies, Ltd., Neihu, Taipei 114 (TW)
(72) Inventor: Yang, Jefferson YS, Asia Pacific Fuel Cell Techn., Neihu, Taipei 114 (TW); Yang, Te-Chou, Asia Pacific Fuel Cell Technologies, Neihu, Taipei 114 (TW); Kao, Mike Pen-Mu, Asia Pacific Fuel Cell Techn., Neihu, Taipei 114 (TW); Hsu, Yao-Sheng, Asia Pacific Fuel Cell Technolog., Neihu, Taipei 114 (TW); Cheng, Yaw-Chung, Asia Pacific Fuel Cell Techn., Neihu, Taipei 114 (TW)
(74) Representative: Goddar, Heinz J., Dr.

(57) **Abstract**

A water draining structure for gas reaction plate of a fuel cell stack includes a gas inlet, a gas outlet, a plurality of wide gas channels parallelly arranged to communicate with the gas inlet, and a plurality of narrow gas channel parallelly arranged to communicate with the gas outlet, all provided on the gas reaction plate. Each of the wide gas channels is communicable with a corresponding one of the narrow gas channels. When an amount of reacting gas is guided into the gas reaction plate, it encounters a significant change in cross-section area from the wide gas channels to the narrow gas channels. A substantial pressure difference between the wide and narrow gas channels is generated, providing a force to blow off moisture in the wide and narrow gas channels.

## Description

### BACKGROUND OF THE INVENTION

### 1. Field of the Invention

The present invention relates to a fuel cell stack, and more particularly to a water draining structure for gas reaction plate of fuel cell stack.

### 2. Description of the Prior Art

With the advancement in human civilization, the demand of energy source has been growing substantially and continuously. In the consumption of conventional energy sources, including coal, oil, and natural gas, waste gases and pollutants are generated, which not only directly pollute the environment, but also initiate many reactions that bring serious pollution to the earth. Inevitably, our living environment has been deteriorating. In the past few decades, people have realized that there are limited fossil energy sources that would eventually be used up very soon if they are kept being abused. Therefore, it has become a common target among the highly developed countries in the world to actively research and develop new substitutable energy sources. Among the various alternatives, fuel cell stack is one of the critical and practical choices. The fuel cell stack has the advantages of high energy conversion efficiency, clean exhaust gas, low noise, and non-use of conventional fuels, as compared with a conventional internal combustion engine.

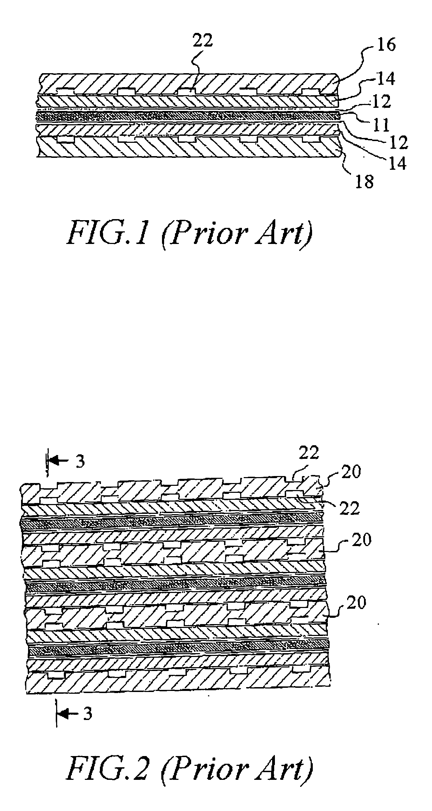

A fuel cell stack is a power-generating unit that generates electrical energy through electrochemical reaction of hydrogen and oxygen. Basically, the electrochemical reaction occurred in the fuel cell stack is a reverse reaction of electrolysis of water, in which chemical energy is transferred into electrical energy. Take for an example, a conventional proton exchange membrane (PEM) fuel cell stack includes a plurality of cell units. **Fig. 1** is a schematic partially cross-sectional view showing a structure of the cell unit of the PEM fuel cell stack. As shown, the cell unit includes a proton exchange membrane (PEM) **11** forming a central layer of the cell unit, two catalyst layers **12** separately provided at two sides of the PEM **11**, two gas diffusion layers (GDL) **14** separately provided at outer sides of the two catalyst layers **12**, and an anode plate **16** and a cathode plate **18** separately further provided at outer sides of the two gas diffusion layers **14**. The proton exchange membrane **11**, the catalyst layers **12**, the gas diffusion layers **14**, the anode plate **16**, and the cathode plate **18** are closely bonded together to form a fuel cell unit.

Please refer to **Fig. 2** that is a schematic partially cross-sectional view showing a structure of the conventional fuel cell stack. For practical application of the fuel cell, a plurality of the cell units are stacked and electrically connected to provide sufficient electrical power. Generally, two adjacent cell units share a common polar plate which serves as the anode and the cathode for the two adjacent cell units. Accordingly, such a polar plate is usually referred to a bipolar plate **20** as shown in **Fig. 2**. Typically, the bipolar plate **20** is provided at two sides with a plurality of groove type gas channels **22** for conveying reacting gases, such as hydrogen and air containing oxygen for reaction, and discharging products, such as water droplets or vapor, from the bipolar plate 20.

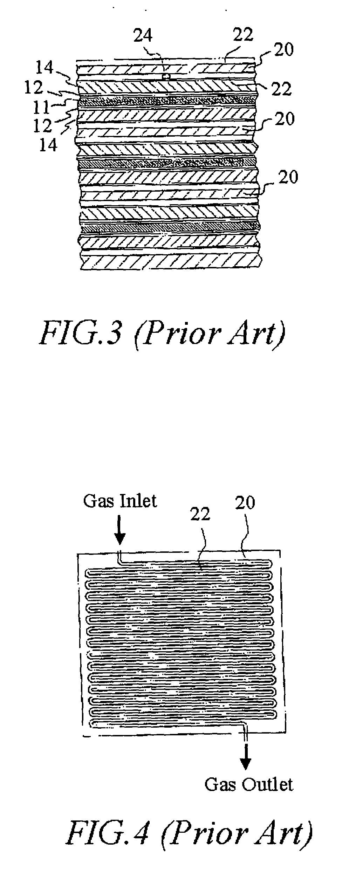

It is noted that the gases in the bipolar plate **20** of the fuel cell stack shown in **Fig. 2** must contain sufficient moisture to carry produced ions to pass through the PEM **11** for proton conduction. In the event the moisture contained in the reacting gases is not adequate, dehydration of PEM **11** would occur, resulting in increased resistance and lowered voltage of the fuel cell stack, and adversely affect a usable life of the fuel cell stack. To improve this condition, a humidifier is included in the fuel cell stack for humidifying the gases to contain sufficient moisture. On the other hand, in the event the moisture contained in the reacting gases is too much, water would condense on the inner wall of the gas channels **22** as a capillary phenomenon. As water gradually accumulates, it subsequently reduces an effective cross-section area of the gas channels **22**, or even eventually clog the gas channels **22** via which reacting gases in the bipolar plate **20** flow, as shown in **Fig. 3** that is a cross-sectional view taken along line **3-3** of **Fig. 2**. In this case, the flowing and supply of reacting gases through the gas channels **22** is reduced or stopped by water droplets 24, and the electrochemical reaction in the fuel cell stack is therefore undesirably slowed down or terminated, impairing the performance of the fuel cell stack. Thus, it is a critical issue to improve the bipolar plates **20** of the fuel cell stack to overcome the above-mentioned problems.

One of effective ways for preventing clogging of gas channel **22** in the bipolar plate **20** by water droplets **24** is to increase a pressure difference ΔP between an inlet and an outlet of the gas channel **22**. When the gas channel **22** is clogged due to accumulation of any water droplet **24**, as shown in **Fig. 3**, and the reacting gases are no longer allowed to smoothly flow through the gas channel **22**, a pressure in a portion of the gas channel **22** before the water droplet **24** is the same as that at the inlet of the gas channel **22**, and a pressure in another portion of the gas channel **22** beyond the water droplet **24** is the same as that at the outlet of the gas channel **22.** When the pressure difference ΔP between the inlet and the outlet of the gas channel **22** is properly increased, this increased pressure difference ΔP may act on the front and rear sides of the water droplet **24** to eventually pulverize the water droplet or blow the same out of the gas channel **22**.

A conventional way to increase the pressure difference ΔP between the inlet and the outlet of the gas channel is to reduce a diameter and/or increase a length of the gas channel, so that the whole gas channel is slender and serpentine, as shown in **Fig. 4**, which is a schematic plan view of a conventional bipolar plate **20**. When the reacting gases flow through and frictionally contact the inner wall surface of the gas channel **22**, a relatively large gas pressure difference is formed between the inlet and the outlet of the gas channel. However, the above-described way of increasing the pressure difference necessitates the forming of the air channel into one single extended and serpentine channel that has a very small diameter, and it inevitably complicates the manufacture process and increases the costs of producing the bipolar plate. In addition, with the thin, long, and serpentine gas channel, the reacting gases flowing therethrough tend to produce turbulence or other undesired disturbance in the gas channel to impede the electrochemical reaction and accordingly reduce the efficiency of the fuel cell stack.

It is therefore desirable to develop a water draining structure for gas reaction plate of fuel cell stack that enables effective removal of water droplets attached to the inner wall surface of the gas channel, and allowing manufacture and fabrication of the gas reaction plate at reduced costs.

### SUMMARY OF THE INVENTION

A primary object of the present invention is to provide a water draining structure for gas reaction plate of fuel cell stack. The water draining structure includes gas channels provided on the gas reaction plate and having a path configuration that is simple in design but effective to create an increased pressure different between an inlet and an outlet of each gas channel to pulverize and blow off water droplets attached to an inner wall surface of the gas channel.

To achieve the above and other objects, the water draining structure for gas reaction plate of fuel cell stack according to the present invention mainly includes a gas inlet, a gas outlet, a plurality of wide gas channels parallelly arranged to communicate with the gas inlet, and a plurality of narrow gas channel parallelly arranged to communicate with the gas outlet, all provided on the gas reacting plate. Each of the wide gas channels is communicable with a corresponding one of the narrow gas channels to create a change in sectional area between them. When the reacting gas is guided into the gas reaction plate, it encounters the significant change in cross-section area of the gas channels. A substantial pressure difference between the wide and narrow gas channels is generated, providing a force that is equal to a product of multiplication of the pressure difference by a cross-section area of the wide gas channel. The force is capable to blow off any moisture that attaches to the gas channels as a capillary phenomenon.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein

Fig. 1 is a schematic partially sectional view showing the structure of a cell unit of a conventional fuel cell stack;

Fig. 2 is a schematic partially sectional view showing a structure of a conventional fuel cell stack;

Fig. 3 is a schematic sectional view taken along line 3-3 of Fig. 2;

Fig. 4 is a schematic plan view of a conventional bipolar plate;

Fig. 5 is a schematic plan view of a cathode plate according to the present invention;

Fig. 6 is a schematic cross-sectional view taken along line 6-6 of Fig. 5;

Fig. 7 is a schematic cross-sectional view taken along line 7-7 of Fig. 5;

Fig. 8 is a schematic plan view of anode plate according to the present invention;

Fig. 9 is a schematic cross-sectional view taken along line 9-9 of Fig. 8; and

Fig. 10 is a schematic cross-sectional view taken along line 10-10 of Fig. 8.

### DETAILED DESCRIPTION OF THE PREFERRED EMBODIMENTS

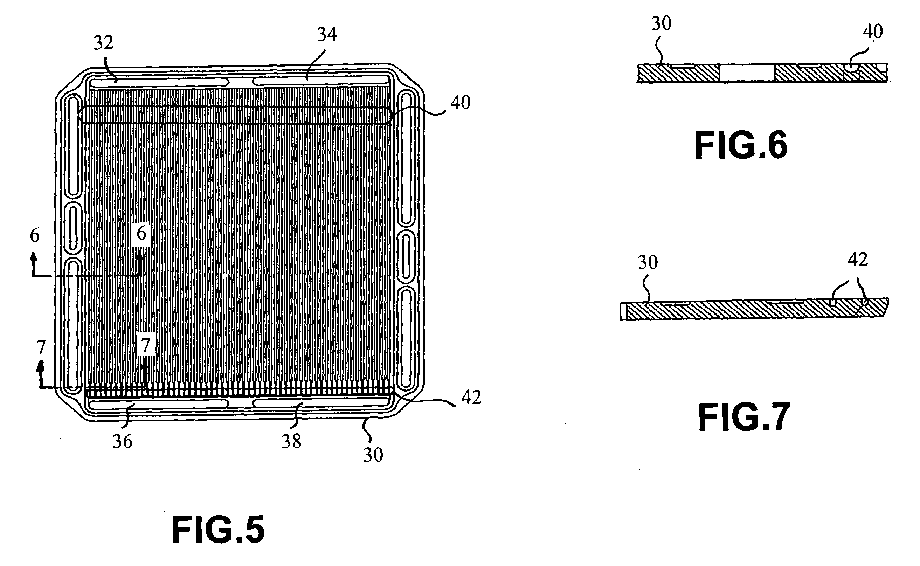

Please refer to **Fig. 5** that is a schematic plan view of a cathode plate **30** of a fuel cell stack according to the present invention. As shown, the cathode plate **30** includes two air inlets **32, 34**, two air outlets **36, 38**, a plurality of wide gas channels **40** that are parallelly arranged to communicate with the air inlets **32**, **34**, and a plurality of narrow gas channels **42** that are parallelly arranged to communicate with the air outlets **36, 38**. Each of the wide gas channels **40** communicates with a corresponding one of the narrow gas channels **42**. When an amount of oxygen-containing air is guided into the cathode plate **30** via the air inlets **32, 34**, the air sequentially flows through the wide and narrow gas channels **40, 42**, at where an electrochemical reaction occurs, and the reacted air flows out of the cathode plate **30** via the air outlets **36, 38.**

**Fig. 6** is a cross-sectional view taken along line **6-6** of **Fig. 5,** and **Fig. 7** is a cross-sectional view taken along line **7-7** of **Fig. 5.** A cross-section area of the wide gas channel **40** for gas flowing therethrough, as shown in **Fig. 6**, is significantly larger than that of the narrow gas channel **42** shown in **Fig. 7**. Therefore, a relatively large pressure difference is produced when the reacting gas flows from the wide air channel having larger cross-section area into the narrow air channel having smaller cross-section area.

Given that an intake pressure at an inlet of the wide gas channel **40** is P1 which is close to a pressure of gas blown into the fuel cell stack by a blower, the cross-section area of the wide gas channel **40** is A1, an exit gas pressure at an outlet of the narrow gas channel **42** is P2 which is close to the atmospheric pressure, and the cross-section area of the narrow gas channel **42** is A2, a force F = (P1-P2) x A1 = ΔP x A1 is produced in the wide gas channel **40.** As compared to the conventional fuel cell stack, the pressure difference ΔP between the wide and the narrow gas channel **40, 42** is larger, and the wide gas channel **40** has a large cross-section area A1, therefore the force F in the wide gas channel **40** is large and strong enough to pulverize or blow off any water droplet attached to the wide gas channel **40** as a result of capillary effect. On the other hand, the narrow gas channel **42** has a small cross-section area A2 and gases flow through at a high velocity. It functions like a nozzle to advantageously pulverize or blow off any water droplet attached to the narrow gas channel **42** due to the capillary effect.

As shown in **Fig. 5**, a gas channel that is diametrically reduced from a wide gas channel **40** to a narrow gas channel **42** actually provides a water draining structure that enables effective removal of water droplets attached to the inner wall surface of the gas channel. Moreover, such a structure is easy to manufacture and fabricate, and efficient in terms of reduction of related costs.

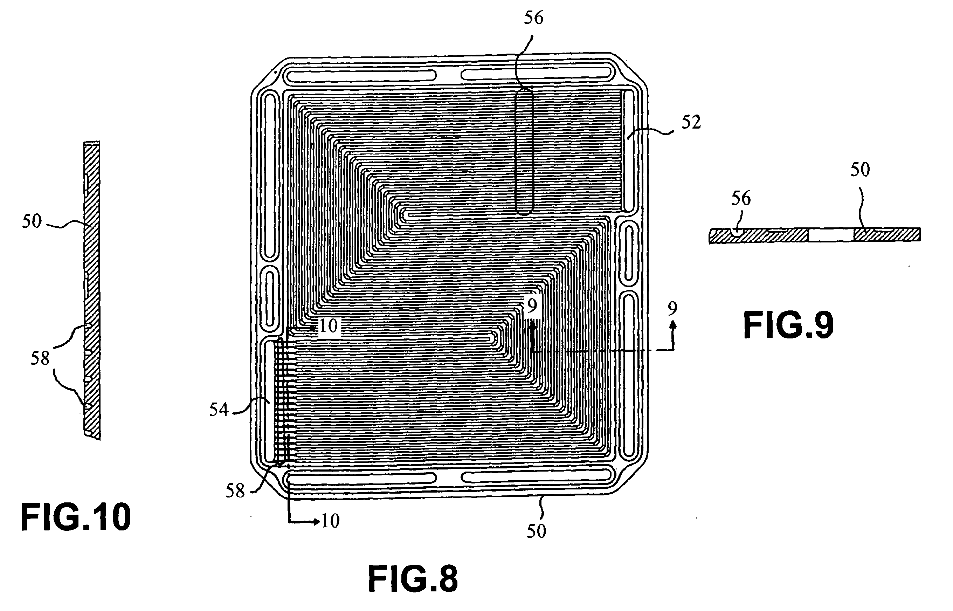

**Fig. 8** is a schematic plan view of an anode plate **50** of the fuel cell stack of the present invention. Similarly, the anode plate **50** includes a hydrogen inlet **52** and a hydrogen outlet **54**, a plurality of wide gas channels **56** that are parallelly arranged to communicate with the hydrogen inlet **52**, and a plurality of narrow gas channels **58** that are parallelly arranged to communicate with the hydrogen outlet **54**. Each of the wide gas channels **56** communicates with a corresponding one of the narrow gas channels **58**. When an amount of hydrogen is guided into the anode plate **50** via the hydrogen inlet **52**, the hydrogen sequentially flows through the wide and narrow gas channels **56, 58**, at where an electrochemical reaction on the hydrogen occurs. Unreacted hydrogen in the gas channels flows out of the anode plate **50** via the hydrogen outlet **54**.

**Fig. 9** is a cross-sectional view taken along line **9-9** of **Fig. 8**, and **Fig. 10** is a cross-sectional view taken along line **10-10** of **Fig. 8**. A cross-section area of the wide gas channel **56** for gas flowing therethrough, as shown in **Fig. 9**, is significantly larger than that of the narrow gas channel **58** shown in **Fig. 10**. Therefore, a relatively large pressure difference is produced when the reacting gas flows from the wide air channel having larger cross-section area into the narrow air channel having smaller cross-section area. Given that an intake pressure at an inlet of the wide gas channel **56** is P1 which is close to a pressure of gas blown into the fuel cell stack by a blower, the cross-section area of the wide gas channel **56** is A1, an exit gas pressure at an outlet of the narrow gas channel **58** is P2 which is close to the atmospheric pressure, and the cross-section area of the narrow gas channel **58** is A2, a force F= (P1 - P2) x A1 = ΔP x A1 is produced in the wide gas channel **56**. As compared to the conventional fuel cell stack, the pressure difference ΔP between the wide and the narrow gas channel **56** and **58** is larger, and the wide gas channel **56** has a large cross-section area A1, therefore the force F in the wide gas channel **56** is large and strong enough to pulverize or blow off any water droplet attached to the wide gas channel **56** as a result of capillary effect. On the other hand, the narrow gas channel **58** has a small cross-section area A2 and gases flow through at a high velocity. It functions like a nozzle to advantageously pulverize or blow off any water droplet attached to the narrow gas channel **58** due to the capillary effect.

As shown in **Fig. 8**, a gas channel that is diametrically reduced from a wide gas channel **56** to a narrow gas channel **58** actually provides a water draining structure that enables effective removal of water droplets attached to the inner wall surface of the gas channel. Moreover, such a structure is easy to manufacture and fabricate, and efficient in terms of reduction of related costs.

It is understood paths configured for the gas channels shown in Figs. **5** and 8 are only illustrated for the purpose of explaining the water draining structure of the present invention, and are not intended to limit the water draining structure of the present invention to such configurations when the structure is applied to the gas channels of the gas reaction plates, including the anode, the cathode, and the bipolar plate. Similarly, the water draining structure of the present invention may be applied to not only the anode and the cathode plate, but also the bipolar plate that serves as the anode and the cathode plate of two adjacent cell units in the fuel cell stack.

Although the present invention has been described with reference to the preferred embodiments thereof, it is apparent to those skilled in the art that a variety of modifications and changes may be made without departing from the scope of the present invention which is intended to be defined by the appended claims.

The features disclosed in the foregoing description, in the claims and/or in the accompanying drawings may, both separately and in any combination thereof, be material for realising the invention in diverse forms thereof.

## Claims

1. A water draining structure for a fuel cell stack, comprising a gas inlet, a gas outlet, a plurality of wide gas channels, and a plurality of narrow gas channel provided on a gas reaction plate of the fuel cell stack; the wide gas channels being parallelly arranged to communicate with the gas inlet, and the narrow gas channels being parallelly arranged to communicate with the gas outlet; each of the wide gas channels being communicable with a corresponding one of the narrow gas channels, a change in cross-section area between the wide gas channel and the narrow gas channel causing a substantial pressure drop and increasing a pressure difference of the gas in the wide gas channel and the narrow gas channel, and the pressure difference providing a force equal to a product of multiplying the pressure difference by a cross-section area of the wide gas channels, the force caused by the pressure difference thereby blowing off at least one water droplets attached to an inner wall surfaces of the wide gas channels and the narrow gas channels.

2. The water draining structure as claimed in claim 1, wherein the gas reaction plate is an anode plate of the fuel cell stack.

3. The water draining structure as claimed in claim 1, wherein the gas reaction plate is a cathode plate of the fuel cell stack.

4. The water draining structure as claimed in claim 1, wherein the gas reaction plate is a bipolar plate of the fuel cell stack.

5. The water draining structure as claimed in claim 1, wherein the gas inlet is a hydrogen inlet, and the gas outlet is a hydrogen outlet.

6. The water draining structure as claimed in claim 1, wherein the gas inlet is an air inlet, and the gas outlet is an air outlet.
